**Europäisches Patentamt**

**European Patent Office**

**Office européen des brevets**

(11) Publication number: **0 039 097**

**A1**

## (12) EUROPEAN PATENT APPLICATION

(21) Application number: **81200372.1**

(22) Date of filing: **03.04.81**

(51) Int. Cl.³: **G 01 G 13/02**
**G 01 G 17/00**

(30) Priority: **25.04.80 NL 8002414**

(43) Date of publication of application:
**04.11.81 Bulletin 81/44**

(84) Designated Contracting States:
**BE DE FR GB IT**

(71) Applicant: **Weegwerktuigenfabriek Alfra B.V.**
**Rondweg 27**
**NL-5531 AJ Bladel(NL)**

(72) Inventor: **Teurlings, Josephus Johannes**
**de Mortel 3**
**NL-5095 BJ Hooge Mierde(NL)**

(74) Representative: **Noz, Franciscus Xaverius, Ir. et al,**
**Algemeen Octrooibureau P.O. Box 645**
**NL-5600 AP Eindhoven(NL)**

(54) Mobile weighing bunker.

(57) The invention is relating to a mobile weighing bunker for weighing material that can be fed through a supply port near the top side of the weighing bunker into the bunker and can be conducted out of the bunker through a delivery port near the underside of the bunker whereby near the top side of the bunker and inside the bunker beneath the supply port a horizontal, removable screening device is arranged, which has a collecting dish having a plurality of openings that can be closed, one of which communicates with an outlet extending outside the weighing bunker and the other opens out in the interior of the weighing bunker.

FIG.1.

-1-

Mobile weighing bunker.

The invention relates to a mobile weighing bunker for weighing out material, which can be fed into the bunker through a supply opening near the top side of the weighing bunker and can be conducted out of the bunker trough a delivery opening near the bottom side of the bunker.

Such a mobile weighing bunker is often employed in conjuction with a number of silos disposed at a higher level than the weighing bunker so that with the aid of a single weighing bunker apportioned amounts of material can be delivered from the various silos and be transferred to transport means or conveyor belts or the like.

Recently many materials delivered in the dry state, such a fodder, chemicals and the like, have been delivered in granular form rather than in powdery form, on the one hand because compressed grains bring about fewer problems with respect to dust formation than powdery material and on the other hand because the granular form is preferred for further processing the material.

For the delivery of granular material from a silo in which this granular material is stored it is often desirable to sieve the material so that any grit or powder still present in the silo is removed from the material prior to the introduction of the material into the weighing bunker. The grit or powdery material thus separated out can subsequently be fed back to a device capable of compressing the material to grains.

According to the invention there is arranged, near the top side of the bunker beneath the supply opening inside the bunker, a horizontal, removable screening device with a collecting dish having a plurality of apertures that can be closed, one of which communicates with an outlet extending outside the weighing bunker and the other opening out in the interior of the weighing bunker.

In this way an effective construction can be obtained for a mobile weighing bunker both for powdery and granular material, which constitutes together with a screening device mounted in the weighing bunker a single unit adapted to run along the silos to be served. Since the outer jacket and the outlet funnel of the screening device are no longer required, the structural height of the combination of weighing bunker and screening device can remain small, which is important with regard to building costs and to the maximum building heights prescribed by authorities, since in order to obtain an optimum storing capacity of the silos with a prescribed maximum building height the height of the space to be left for the weighing bunker and the transport means to travel below the silos has to be minimized. A further advantage of the construction according to the invention is that owing to the omission of the outer jacket and the outlet funnel for the screening device the latter is readily accessible for maintenace purposes and the like.

The invention will be described more fully hereinafter with reference to one embodiment of the construction according to the invention shown schematically in the accompanying Figures.

Fig. 1 is a side elevation of a mobile weighing bunker in accordance with the invention.

Fig. 2 is an elevational view of the weighing bunker of Fig. 1 in the direction of the arrow II in Fig. 1.

Fig. 3 is a plan view of the weighing bunker shown in Fig. 1.

Fig. 4 is an elevational view of the top cover of the mobile weighing bunker with a screening device fastened thereto.

The mobile weighing bunker comprises a frame 1 supported by ground wheels 2, by means of which the weighing bunker can travel along rails 3.

In the frame 1 is suspended in a conventional manner (not shown) a weighing bunker having a lower, downwardly tapering portion 4 and a superjacent, rectangular portion bounded by four side walls 5 to 8.

The top ends of the vertical columns of the frame 1 support a top cover 10 of the weighing bunker with the aid of connecting flanges 9. The lower rim of the top cover 10 is coupled with the upper rims of the plates 5 to 8 of the weighing bunker with the aid of connecting part 11 of flexible material ( preferably filter cloth) not being capable of transferring forces.

The top cover 10 has a supply port 12. This supply port 12 constitutes the lower end of a filling funnel 13 fastened to the top cover 10.

The construction is such that the connecting flanges 9 and the tie member 11 of flexible material at the ccver 10 as well as the connection of the side wall 5 with the further parts of the weighing bunker can be readily disengaged.

On the underside the weighing bunker has a delivery port 14, which can be closed and the weighing bunker comprises furthermore a control-platform 15 with a desk 16 provided with control-members for actuating the weighing bunker and for metering the desired amounts of material. However, this part is known per se so that further details may be dispensed with.

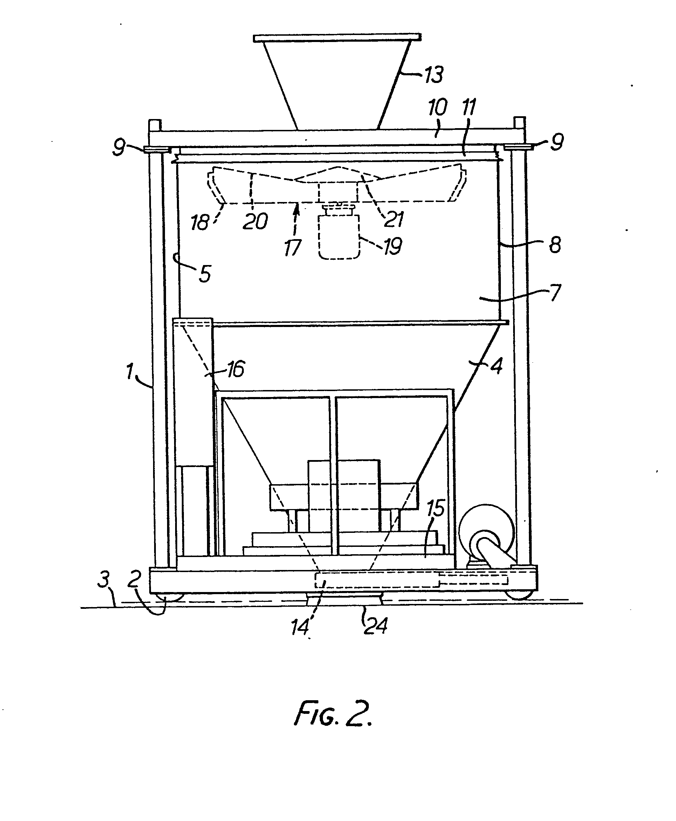

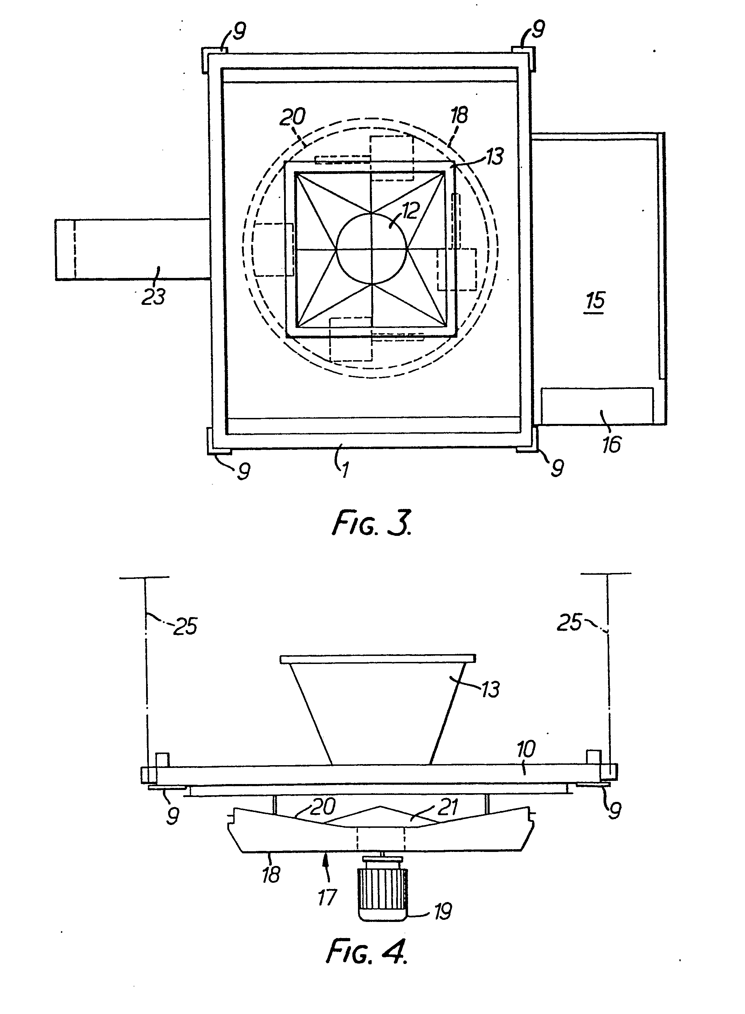

From Fig. 4, in particular, it will be apparent that a screening device 17 is suspended to the underside of the top cover 10. This screening device comprises a collecting dish 18 and a sieve disc 20 disposed above the collecting dish and rotatably driven by an electric motor 19, the central part cf said disc located beneath the support port 12 is covered by a conical plate 21.

The collecting dish 18 has a delivery orifice 22, which can be closed and which is located above a shoot 23 extending across the side wall 6 of the weighing bunker in downward direction and furthermore a plurality of passages which cannot be closed and which provide direct access to the weighing bunker. For this purpose the passages and the delivery orifice 22 are provided with pneumatically controlled slides arranged so that, when the passages are open, the orifice 22 is closed and conversely.

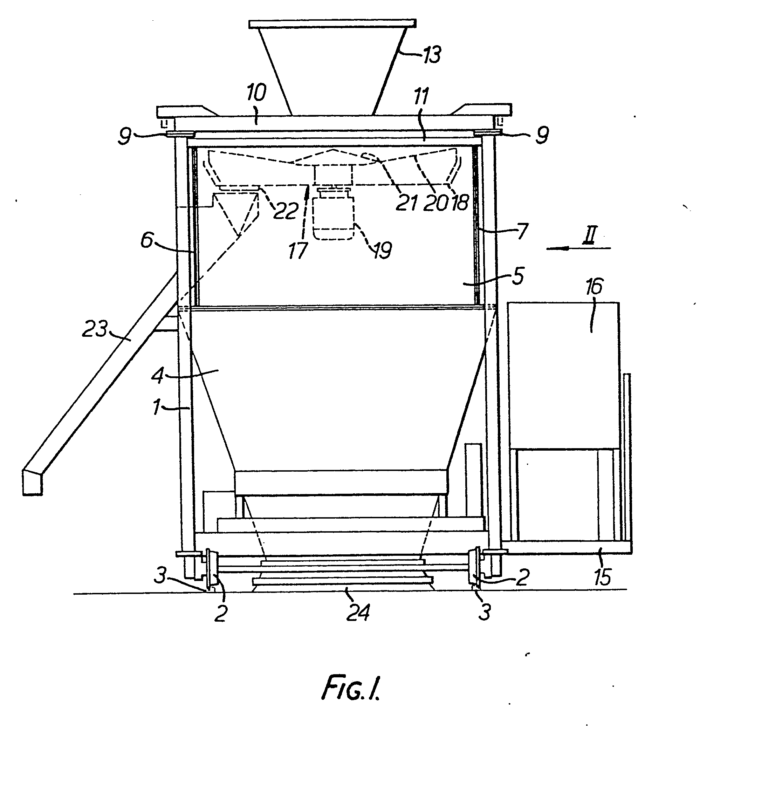

From Figs. 1 and 2 it will be seen that the screening device 17 is located in normal operation inside the space bounded by the walls of the weighing bunker so that the disposition of the screening device does not require additional spance above the weighing bunker.

When powdery material is processed, the passages will be open and the delivery orifice 22 will be closed so that the material directly drops across the sieve 20 and the passages in the collecting dish 18 into the weighing bunker. On the contrary, in the case of granular material the passages will be closed and the orifice 22 will be opened.

Before the granular material is fed into the weighing bunker, the sieve 20 is rotated with the aid of the electric motor 19. The granular material then flowing through the supply funnel 13 downwards is thrown over the sieve 20 to the outer periphery thereof and drop down along the outer periphery of the screening device. Grit and powdery material will pass through the openings in the sieve 20 and attain the collecting dish 18, and with the aid of members ( not shown in detail) this material is displaced towards the delivery orifice 22, the material being conducted through said delivery orifice and the shoot 23 to a conveyor belt or the like (not shown) by which said material is fed back to a granulating device.

When the desired amount of material is fed into the weighing bunker, the supply of material from the silo is stopped and before the delivery port 14 of the bunker is opened the material can be delivered through a delivery shoot 24 in the floor supporting the bunker to a transport means, for example a van or the like.

For carrying out maintenance operations or the like on the screening device the top cover 10 can be disengaged from the further part of the weighing bunker by loosening the flange connections 9 and by breaking up the connection between the top cover 10 and the tie member 11. With the aid of suspension members 25 said top cover 10 can be suspended as is schematically shown in Fig. 4 and after the removal of the readily releasable side wall 5 of the weighing bunker the latter can be displaced so that the screening device is set free of the interior of the weighing bunker. After the required repair or maintenance have been carried out the screening device can be simply re-arranged in the bunker by repeating the above- mentioned operations in the reverse order.

It will be obvious that many variants and/or supplements of the em- bodiment described above and schemically shown in the accompanying Figures can be imagined. For example, instead of using a weighing bunker adapted to travel along rails 3 disposed on a floor, a weighing bunker may be employed which is movably supported by rails disposed above the weighing bunker, in which case the whole weighing bunker is suspended to be top cover 10. In such a case the part of the system hanging at the top cover 10 is held up from below for removing the screening device, after which the connection between the top cover 10 and the remaining part of the system can be disengaged in the manner described above and subsequently the top cover with the screening device hanging at it can be displaced with respect to the further part of the system.

-1-

CLAIMS

1.     A mobile weighing bunker for weighing material that can be fed through a supply port near the top side of the weighing bunker into the bunker and can be conducted out of the bunker through a delivery port near the underside of the bunker characterized in that near the top side of the bunker and inside the bunker beneath the supply port a horizontal, removable screening device is arranged, which has a collecting dish having a plurality of of openings that can be closed, one of which communicates with an outlet extending outside the weighing bunker and the other opens out in the interior of the weighing bunker.

2.     A mobile weighing bunker as claimed in Claim 1, characterized in that the screening device is fastened to a releasable top cover of the bunker.

3.     A mobile weighing bunker as claimed in Claim 1 or 2 characterized in that at least part of a lateral boundary of the weighing bunker is connected with the further part of the weighing bunker so as to be readily releasable.

4.     A mobile weighing bunker as claimed in anyone of the preceding Claims characterized in that the screening device comprises a rotatable sieve disposed above a collecting dish, the outlet being in communication with the collecting dish.

5.     A mobile weighing bunker as claimed in anyone of the preceding Claims characterized in that the openings in the collecting dish or the screening device are provided with pneumatically actuated slides.

6.     A mobile weighing bunker as claimed in anyone of the preceding Claims characterized in that the screening device is constructed without an outer jacket of itself and without outlet funnel.

"1/3"

FIG.1.

FIG. 2.

FIG. 3.

FIG. 4.

**European Patent Office**

**EUROPEAN SEARCH REPORT**

## DOCUMENTS CONSIDERED TO BE RELEVANT

| Category | Citation of document with indication, where appropriate, of relevant passages | Relevant to claim |
|---|---|---|
| | GB - A - 1 395 322 (J.W. TILLS)<br>* Page 1, lines 9-13; page 1, line 79 - page 2, line 35; page 2, line 58 - page 3, line 28; figures * | 1,2,4-6 |
| | -- | |
| | FR - A - 2 142 655 (C.J.G. LASSERON)<br>* Page 1, lines 1,2; page 2, line 3 - page 3, line 24; figures * | 1 |
| | -- | |
| | FR - A - 2 184 915 (R.L. WEBER)<br>* Page 1, lines 1-10; page 6, line 37 - page 7, line 20; page 9, lines 10-38; figures 1,2 * | 1 |
| | -- | |
| | US - A - 3 172 491 (K. MAINEY)<br>* Column 1, lines 11,12; column 1, line 67 - column 2, line 71; figures 2,3 * | 5 |
| | -- | |
| A | DE - A - 2 841 309 (J. ERBACHER)<br>* Page 4, line 1 - page 5, line 8; page 10, lines 1-25; page 12, line 11 - page 16, line 31; figures 1-3 * | 1,5 |
| | -- | |
| A | FR - A - 975 080 (L.J.B. PONTIER)<br>* Page 1, left-hand column, line 36 - right-hand column, line 6; figures * | 1 |
| | ---- | |

**CLASSIFICATION OF THE APPLICATION (Int. Cl.³)**

G 01 G 13/02
17/00

**TECHNICAL FIELDS SEARCHED (Int Cl³)**

G 01 G 13/00
13/02
13/04
13/06
13/22
13/24
15/00
17/00
19/00
21/00

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 22-07-1981 | NENTWICH |

EPO Form 1503.1  06.78